# EUROPÄISCHE PATENTSCHRIFT

(11) **EP 1 061 741 B1**
(45) Veröffentlichungstag und Bekanntmachung des Hinweises auf die Patenterteilung: **07.04.2004**
(21) Anmeldenummer: 99111432.3
(22) Anmeldetag: 11.06.1999
(51) Int. Cl.: H04N 7/10

(54) **System zur universellen Verkabelung eines Gebäudes oder mehrerer Nutzer, Komponenten eines derartigen Systems sowie dazugehöriges Verfahren**
Universal cabling system for a building or a plurality of users, components of the system and corresponding method
Système pour le câblage universel d'un bâtiment ou de plusieurs utilisateurs, les composants d'un tel système ainsi que le procédé correspondant

(43) Veröffentlichungstag der Anmeldung: 20.12.2000
(73) Patentinhaber: DÄTWYLER AG KABEL + SYSTEME, CH-6460 Altdorf (CH)
(72) Erfinder: Klees, Ernst, 80939 München (DE)
(74) Vertreter: Turi, Michael, Dipl.-Phys.

(56) Entgegenhaltungen:
- EP-A- 0 329 912
- EP-A- 0 352 210
- WO-A-98/54893
- DE-U- 29 521 360
- GUEULLE P GUEULLE P: "MODULES DE TRANSMISSION VIDEO SUR PAIRE TORSADEE. MODULES DE TRANSMISSION VIDEO SUR PAIRE TORSADEE" ELECTRONIQUE RADIO PLANS, Nr. 555, 1. Februar 1994 (1994-02-01), Seiten 43-46 43, XP000426460 ISSN: 1144-5742

## Beschreibung

Die Erfindung betrifft die universelle Verkabelung eines Gebäudes oder mehrerer Nutzer, z.B. zur Übertragung von TV-Signalen. Insbesondere betrifft die Erfindung ein System zur universellen Verkabelung eines Gebäudes oder mehrerer Nutzer, die Verwendung eines Anpaßgliedes bzw. eines Verstärkers für ein derartiges System, sowie ein dazugehöriges Verfahren.

Die Verkabelung eines Gebäudes oder mehrerer Nutzer zur Nachrichten-, Informations- und Datenübertragung ist aus der Nachrichtentechnik oder der Gebäudeleit- bzw. Gebäudesystemtechnik bekannt. Verschiedenartige Endgeräte, wie zum Beispiel Telefonapparate, Fernsehgeräte und Netzcomputer sollen innerhalb eines Gebäudes mit ihren entsprechenden Dienstleitungen oder anderen Quellen/Senken verbunden werden. Dabei soll auch die Zahl der zu verlegenden Kabel aus Kostengründen möglichst klein gehalten werden, sowie nachträgliches Verlegen von weiteren Kabeln für andere Endgeräte vermieden werden. Hierbei tritt die Schwierigkeit auf, daß einige Geräte und somit auch ihre Dienstleitungen für eine (erd)asymmetrische Übertragung von sog. asymmetrischen Signalen konzipiert sind, wohingegen andere Geräte und die dazugehörigen Dienstleitungen für eine (erd)symmetrische Übertragung von sog. symmetrischen Signalen konzipiert sind. Bei Telefonleitungen handelt es sich zum Beispiel im allgemeinen um symmetrische Leitungen, Fernsehantennenleitungen dagegen sind asymmetrische Leitungen und Computernetze nutzen in der Regel beide Leitungsarten. Ein symmetrisches Signal kann nicht oder nur unter Funktionseinbußen über eine asymmetrische Leitung übertragen werden, und umgekehrt. Als asymmetrische Leitungen werden häufig Koaxialkabel eingesetzt.

Ein System zur universellen Verkabelung nach der eingangs genannten Art für die Übertragung von sowohl symmetrischen Signalen, z.B. Datensignale eines LAN, als auch asymmetrischen Signalen, z.B. TV-Signalen, an eine Mehrzahl von Endgeräten ist beispielsweise aus EP-A-0 329 919 bekannt. Über jeweils separate Kopplungselemente werden die ankommenden symmetrischen und asymmetrischen Signale auf ein Leitungssystem bestehend aus mehreren geschirmten verdrillten Einpaarleitungen (Shielded Twisted Pair) gekoppelt und über diese an die jeweils zugehörigen Endgeräte übertragen. Für die Übertragung der symmetrischen Signale werden die vorgenannten Leitungen symmetrisch betrieben, und für die Übertragung der asymmetrischen Signale werden die vorgenannten Leitungen asymmetrisch betrieben. Des weiteren werden die asymmetrischen Signale, z.B. TV-Breitbandsignale, als Zusatz simultan mit den symmetrischen Basisbandsignalen unter Verwendung des Kabelschirms übertragen. Neben der aufwendigen Betriebsweise des vorgenannten Kabelsystems, d.h. sowohl symmetrisch als auch asymmetrisch, beruht das bekannte System auf der Übertragung von den symmetrischen Signalen und den asymmetrischen Signalen auf ein- und demselben Übertragungsband. Dieses Übertragungsband begrenzt z.B. die TV-Breitbandsignale auf maximal 300 MHz.

Aus GUEULLE P GUEULLE P: "MODULES DE TRANSMISSION VIDEO SUR PAIRE TORSADEE. MODULES DE TRANSMISSION VIDEO SUR PAIRE TORSADEE ELECTRONIQUE RADIO PLANS, Nr. 555, 1. Februar 1994, Seiten 43-46, XP000426460 ISSN: 1144-5742, ist ferner eine Verstärkeranordnung zur Übertragung eines schmalbandigen Videosignals auf einer symmetrisch betriebenen verdrillten Einpaarleitung bekannt. An der Eingangsseite wird eine Umsetzung der asymmetrischen Videosignale auf eine symmetrische Übertragung und auf der Ausgangsseite eine Rückumsetzung auf die asymmetrische Übertragung vorgenommen. Bei Leitungslängen von 1000 Metern und mehr werden dämpfungsbedingte Verluste der übertragenen diskreten Videosignale durch einen Verstärker kompensiert.

Ein ähnliches System ist in der WO 98/54893 offenbart.

Ferner ist in der DE 295 21 360 U1 aus dem Hause der Anmelderin ebenfalls ein System zur universellen Verkabelung eines oder mehrerer Nutzer für die Übertragung von asymmetrischen und symmetrischen Signalen bekannt. Dieses System beruht auf der Verwendung eines speziellen Leitungstyps, welcher wahlweise für eine symmetrische oder für eine asymmetrische Übertragung genutzt werden kann. Hierbei werden die jeweiligen Signale unterschiedlich in die Leitung eingekoppelt.

Die WO 91/07018 offenbart im Zusammenhang mit der Übertragung von Breitbandsignalen in Netzwerken einen Verstärker innerhalb einer Verbraucher-Schnittstelle. Der Verstärker, der das ankommende Signal vor der Weiterleitung an die Nutzer verstärkt, soll dabei die dämpfungsbedingten Verluste ausgleichen.

Die vorliegende Erfindung zielt darauf ab, eine universelle Verkabelung eines Gebäudes oder mehrerer Nutzer derart zu verbessern, daß an der Eingangs- und/oder Ausgangsseite eine Optimierung der übertragenen Signale ermöglicht wird.

Die Erfindung erreicht dieses Ziel durch die Gegenstände der unabhängigen Ansprüche 1, 24, 25 und 26. Vorteilhafte Ausführungsformen der Erfindung ergeben sich aus den jeweils abhängigen Ansprüchen.

Danach schafft die Erfindung ein System zur universellen Verkabelung eines Gebäudes oder mehrerer Nutzer für die Übertragung von Signalen, mit: einem ausschließlich symmetrisch betriebenen Leitungsnetz zur Übertragung von Signalen an verschiedene Nutzer; einem aktiven Anpaßglied für asymmetrisch übertragene Breitbandsignale mit einer Vielzahl von Kanälen, insbesondere TV-Breitbandsignale, an der Eingangsseite des Leitungsnetzes, welches einen aktiven Umsetzer zum Umsetzen der ankommenden Signale von asymmetrischer auf symmetrische Übertragung und einen Verteiler zum Verteilen der symmetrischen Signale auf mehrere Ausgänge umfaßt; und einem Verstärker auf der Nutzerseite des Leitungsnetzes, welcher derart ausgebildet ist, daß er längenabhänge Leitungsverluste und durch die Umsetzung auf die symmetrische Übertragung bedingte frequenzabhängige Leitungsverluste im Leitungsnetz der universellen Verkabelung kompensiert.

Nach einem weiteren Aspekt der Erfindung wird ein Verfahren zur Übertragung von Signalen mittels einer universellen Verkabelung eines Gebäudes oder mehrerer Nutzer bereitgestellt, mit den Schritten: aktives Umsetzen von ankommenden asymmetrisch übertragenen Breitbandsignalen mit einer Vielzahl von Kanälen, insbesondere TV-Breitbandsignalen, von asymmetrischer auf symmetrische Übertragung und Verteilen der Signale auf mehrere Ausgänge an der Eingangsseite eines Leitungsnetzes; symmetrisches Übertragen der Signale über das Leitungsnetz bis zum jeweiligen Nutzer; Verstärken der Signale auf der Nutzerseite, derart, daß längenabhänge Leitungsverluste und durch die Umsetzung auf die symmetrische Übertragung bedingte frequenzabhängige Leitungsverluste im Leitungsnetz der universellen Verkabelung kompensiert werden; und Umsetzen der Signale von symmetrischer auf asymmetrische Übertragung für die Zufuhr an den jeweiligen Nutzer.

Nach einem weiteren Aspekt der Erfindung wird eine Verwendung eines Anpaßgliedes bzw. eines Verstärkers in einem System der vorgenannten Art bereitgestellt.

Vorzugsweise weist der aktive Umsetzer selbst auch einen Verstärker auf. Dieser gleicht die parasitären Anpaßverluste, die sich bei der Umsetzung ergeben, aus. Somit ist es möglich, asymmetrisch übertragene Signale, insbesondere TV-Signale, weitgehend ohne Verluste auf eine symmetrische Übertragung umzusetzen und außerdem auf mehrere Ausgänge zu verteilen, so daß das ankommende Signal mehreren Nutzern an verschiedenen Endgeräten zur Verfügung gestellt werden kann. Die Umsetzung geht bevorzugt mit einer Impedanzänderung von z.B. 75 Ω (entsprechend dem Wellenwiderstand üblicher Koaxialkabel) auf 100 Ω einher, die durch die Symmetrierungsschaltung als solche bedingt ist.

Vorzugsweise weist das aktive Anpaßglied einen Anschluß an ein lokales Netzwerk, sog. LAN, auf. Damit ist es möglich, Informationen oder Signale aus dem lokalen Netzwerk über den Verteiler und Umsetzer an die jeweiligen Nutzer weiterzuleiten.

Vorzugsweise wird bei der Übertragung von z.B. TV-Signalen eine Übertragungsbandbreite im Basisband von 40 bis 450 MHz gewählt. Dann ist es mit handelsüblichen Frequenzumsetzern möglich, jede gegenwärtig übliche Übertragung zu realisieren. Im Fall von Breitband-Übertragungen wie zum Beispiel bei TV-Signalen kann dann eine große Anzahl an Kanälen übertragen werden.

Besonders bevorzugt weist das aktive Anpaßglied eine Möglichkeit zur Fernspeisung von etwaigen nachgeschalteten Vorrichtungen auf. Die daraus resultierenden Vorteile werden in Zusammmenhang mit dem später beschriebenen erfindungsgemäßen System deutlich.

Um das aktive Anpaßglied in gewünschter Weise steuern zu können, weist das Anpaßglied vorzugsweise eine EDV-Schnittstelle auf. Damit kann z.B. die Verteilung der Ausgänge gesteuert werden, aber auch Einstellungen an etwaigen nachgeschalteten regelbaren Vorrichtungen, z.B. des nachfolgend noch zu beschreibenden Nachbrennverstärkers, können so vorgenommen werden. Hierbei kann auch eine geeignete Management-Software verwendet werden, die eben diese Steuerungsfunktionen zuläßt.

Um weitere Verteilungsmöglichkeiten und insbesondere Verteilungskombinationen zuzulassen, schließt sich in der universellen Verkabelung vorzugsweise ein weiterer Verteiler nach dem aktiven Anpaßglied an. Dieses Verteilerfeld sieht jedoch keine Umsetzung mehr vor, und somit auch keine Impedanzänderung.

Erfindungsgemäß ist auf der Nutzerseite der universellen Verkabelung der vorgenannte Verstärker, sog. "Nachbrennverstärker", angeordnet, der zusammen mit dem erfindungsgemäßen Anpaßglied auf der Eingangsseite der universellen Verkabelung betreibbar ist. Dieser Nachbrennverstärker ist regelbar, um die bei der universellen Verkabelung von Gebäuden oder mehrerer Nutzer auftretenden variablen Leitungsverluste auszugleichen. Die hierbei auftretenden Leitungsverluste sind hauptsächlich dämpfungsbedingt und somit stark längenabhängig, aber auch frequenzabhängig. Da bei der Verkabelung von Gebäuden oder mehrerer Nutzer deutlich unterschiedliche Leitungslängen auftreten können (z.B. zwischen 3 und 90 m), spielt die längenabhängige Dämpfung eine entscheidende Rolle. Sie kann für die genannten Längen zwischen 45 dB schwanken. Ein Vorteil des auf der Nutzerseite angeschlossenen Nachbrennverstärkers ist, daß der Bediener eines Endgeräts auf Nutzerseite individuell die Qualität des ankommenden Signals für das jeweilige Endgerät optimieren kann. Somit kann die Verstärkung je nach Leitungslänge eingestellt werden. Jedes Endgerät kann damit unabhängig von der tatsächlichen Leitungslänge unter optimalen Bedingungen betrieben werden. Die Einstellung des regelbaren Nachbrennverstärker erfolgt bevorzugt aber auch über das erfindungsgemäße aktive Anpaßglied an der Eingangsseite der universellen Verkabelung, welches in einer bevorzugten Ausführungsform über eine mit einer geeigneten Managementsoftware betreibren EDV-Schnittstelle verfügt.

Die notwendige Verstärkung ist auch von der Frequenz abhängig, und diese Abhängigkeit variiert zudem mit den Eigenschaften des eingesetzten Kabeltyps bzw. der eingesetzten Übertragungsart, wie symmetrisch oder asymmetrisch. Die Dämpfung ist bekanntlich proportional zu der Quadratwurzel der Frequenz. Daher sind besonders Signale bei hohen Frequenzen verlustbehaftet. Die Dämpfungen bei verschiedenen Kabeltypen unterscheiden sich in ihrer Frequenzabhängigkeit nicht nur durch einen Versatz oder durch einen Proportionalitätsfaktor, sondern auch durch eine unterschiedliche Gewichtung, d.h. unterschiedlichen charakteristischen Verlauf der Dämpfung, insbesondere bei hohen Frequenzen. Die damit unterschiedliche Dämpfung wird vorzugsweise auch durch den erfindungsgemäßen Verstärker kompensiert.

Die Amplituden- oder Phasenverschiebungen, die aufgrund der verschiedenen Übertragungcharakteristiken von asymmetrischer und symmetrischer Übertragung auftreten, werden vorzugsweise mittels Kabelentzerrung unabhängig von der Dämpfung im vorgenannten Verstärker kompensiert. Somit ergeben sich keine Nachteile aus der Umsetzung von asymmetrischer auf symmetrische Übertragung. Daher ist eine Optimierung des beim Nutzer ankommenden Signals in günstiger Weise möglich.

Damit an die universelle Verkabelung weiterhin Endgeräte nach dem Verstärker angeschlossen werden können, die handelsüblich für die asymmetrische Übertragung konzipiert sind, wie zum Beispiel TV-Geräte, ist in dem Verstärker bevorzugt eine Umsetzung von symmetrischer auf asymmetrische Übertragung vorgesehen. Wie vorstehend beschrieben, geht hiermit wieder eine Impedanzänderung einher, z.B. von 100 Ω Impedanz auf 75 Ω Impedanz. In diesem Fall ist an dem Verstärker ein Anschluß z.B. für ein übliches Antennen-Koaxialkabel vorgesehen.

Das erfindungsgemäße System zur Verkabelung von Gebäuden oder mehrerer Nutzer umfaßt ein Leitungsnetz zur Übertragung der Signale an verschiedene Nutzer sowie ein aktives Anpaßglied der vorstehend beschriebenen Art und einen Verstärker der vorstehend beschriebenen Art. Aufgrund ihrer Eigenschaften verbessern diese Systemkomponenten die Aufteilung von ankommenden Signalen (aufgrund der aktiven Verteilung und Verstärkung) und optimieren die beim Nutzer ankommenden Signale (aufgrund der Kompensation z.B. längenabhängiger Leitungsverluste). Einstellungen an dem Verstärker können bevorzugt über das aktive Anpaßglied vom Verteiler aus gesteuert werden. Somit ist es möglich, von dort aus die Verstärkung des Nachbrennverstärkers über eine geeignete Managementsofware frei einzustellen. Da das Anpaßglied in einer vorteilhaften Ausführungsform über eine EDV-Schnittstelle verfügt, wird es damit möglich, auch über eine Managementsoftware den Verstärker zu steuern. Trotzdem ist es an der Benutzerseite weiterhin möglich, Einstellungen an dem Verstärker selbst vorzunehmen und so ist es dem jeweiligen Benutzer eines Endgeräts möglich, die Qualität des empfangenden Signals individuell zu optimieren.

Die Stromversorgung des Verstärkers erfolgt im System bevorzugt mittels Fernspeisung aus dem erfindungsgemäßen aktiven Anpaßglied. Daher muß an dem Einsatzort des Verstärkers keine zusätzliche Stromversorgung vorgesehen sein, was das System insgesamt vereinfacht. Hierbei erfolgt die Fernspeisung vorzugsweise über wenigstens ein freies Aderpaar der Übertragungsleitung oder durch Phantomspeisung über ein Datenübertragungspaar.

Schließlich schafft die Erfindung ein Verfahren zur Übertragung von Signalen mittels einer universellen Verkabelung von Gebäuden oder mehrerer Nutzer. Dabei werden die ankommenden Signale aktiv verteilt, umgesetzt und Verluste der Umsetzung werden ausgeglichen. Dann können die Signale über symmetrische Leitungen bis zum Endverbraucher übertragen werden. Dort werden sie noch verstärkt und gegebenfalls entzerrt und wieder umgesetzt, um einen Anschluß an die entsprechenden Endgeräte zuzulassen.

Weitere Ausgestaltungen und Vorteile der Erfindung ergeben sich aus der nachfolgenden Beschreibung eines bevorzugten Ausführungsbeispiels. Dabei wird auf die beigefügte schematische Zeichnung Bezug genommen. In der Zeichnung zeigt:

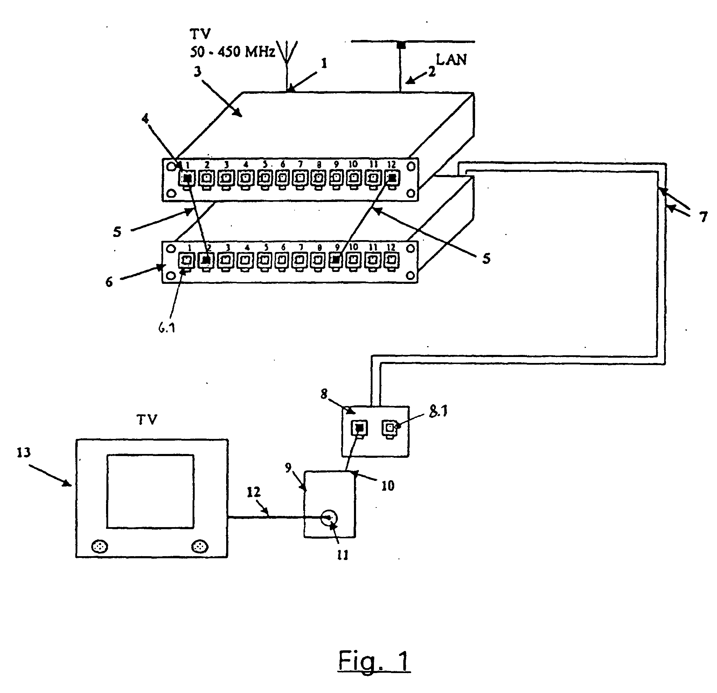

- Fig. 1: ein schematisches Diagramm eines erfindungsgemäßen Systems zur universellen Verkabelung eines Gebäudes oder mehrerer Nutzer.

Im allgemeinen verbindet eine universelle Verkabelung für ein Gebäude oder Gebäudeteil mehrere Nutzergeräte mit Dienstleitungen oder Quellen/Senken. Bei den Nutzergeräten kann es sich z.B. um mehrere Fernsehgeräte handeln, die in verschiedenen Räumen des Gebäudes und/oder an verschiedenen Stellen eines Raumes des Gebäudes aufgestellt sein können. Bei den Dienstleitungen handelt es sich dann um eine Fernsehantennenleitung oder einem Leitungsnetz, welche z.B. von außen an das Gebäude herangeführt sind. Die z.B. von außen ankommenden TV-Signale werden durch die universelle Verkabelung auf die einzelnen Endgeräte verteilt, wobei zwischen einer noch näher zu beschreibenden Verteilereinheit und den Endgeräten jeweils ein Übertragungskabel (das aus einer Vielzahl von Einzelleitungen bestehen kann) verläuft. Mit einer derartigen universellen Verkabelung können verschiedene Arten von Vernetzungen der Endgeräte realisiert werden, wie etwa ein Sternnetz, Strahlennetz, Maschennetz, Verbundnetz, hierarchische Netze sowie Mischformen hiervon.

Das in Fig. 1 dargestellte universelle Verkabelungssystem zeigt der Übersicht halber nur ein Endgerät mit der zugehörigen Übertragungsleitung der universellen Verkabelung. Ein z.B. von außen herangeführtes Breitband-TV-Signal, für welches eine Übertragungsbandbreite im Basisband von 40 bis 450 MHz gewählt wird, wird asymmetrisch über ein Koaxialkabel mit 75 Ω Impedanz oder in Verlängerung einer Antenne über einen 75 Ω Koaxialkabeleingang 1 in ein aktives Anpaßglied 3 geführt. Weiterhin verfügt das aktive Anpaßglied 3 über einen Netzwerkanschluß 2 zum Empfangen von symmetrischen Signalen z.B. aus einem lokalen Netzwerk (sogenanntes LAN) in dem Gebäude. Das aktive Anpaßglied 3 enthält einen aktiven Verteiler, der die ankommenden TV-Signale auf zwölf aktive Ausgänge 4 jeweils mit einem Ausgangswiderstand von 100 Ω verteilt. Außerdem werden die TV-Signale im Anpaßglied 3 von einer asymmetrischen auf eine symmetrische Übertragung umgesetzt, wobei hiermit gleichzeitig eine Impedanzänderung von 75 Ω (asymmetrische Übertragung) auf 100 Ω (symmetrische Übertragung) erfolgt. Etwaige parasitäre Anpaßverluste, die aus dieser Umsetzung resultieren, werden mittels eines im aktiven Anpaßglied 3 befindlichen Verstärkers kompensiert.

Über wenigstens ein Patchkabel 5 (in der Fig. 1 in zwei Patchkabel 5 dargestellt) mit jeweils 100 Ω Impedanz ist das aktive Anpaßglied 3 mit einem weiteren Verteiler, nämlich einem Verteilerfeld 6 verbunden. Das Verteilerfeld 6 verfügt über zwölf 100 Ω Eingänge 6.1, wobei der zweite und neunte der Eingänge 6.1 mit dem ersten bzw. zwölften der Ausgänge 4 des aktiven Anpaßgliedes 3 jeweils über ein Patchkabel 5 verbunden sind. Mit dieser Verteileranordnung ist es möglich, jede beliebige der Verbindungsleitungen zu den Endgeräten mit jedem beliebigen der ankommenden Signale und jeder beliebigen anderen Verbindungsleitung zu verbinden. Im folgenden Fall ist lediglich eine Verbindungsleitung in Form eines Datenkabelpaares 7 mit 100 Ω Impedanz, welches für eine symmetrische Übertragung ausgelegt ist, dargestellt; weitere nicht dargestellte Verbindungsleitungen an andere nicht dargestellte Endgeräte sind ebenfalls vom Verteilerfeld 6 weggeführt. Demnach werden die umgesetzten und verstärkten TV-Signale über die Datenkabel 7 in symmetrischer Übertragungsart an eine Datendose 8 übertragen, die bereits in der Nähe des oder der Nutzerendgeräte angeordnet ist. Die Datendose 8 verfügt über zwei Ausgänge 8.1 mit jeweils einem Ausgangswiderstand von 100 Ω. Von einem der Ausgänge 8.1 der Datendose 8 werden die übertragenen TV-Signale an einen Nachbrennverstärker 9 übertragen. Der Nachbrennverstärker 9 ist derart ausgelegt, daß er Dämpfungsverluste im Datenkabelpaar 7, die insbesondere von dessen Länge abhängen, durch eine entsprechende Verstärkung der TV-Signale kompensiert. Der Nachbrennverstärker 9 kann auf Nutzerseite vom Benutzer des/der Endgeräte bequem auf die jeweils notwendige Verstärkung eingepegelt werden. Ferner findet im Nachbrennverstärker 9 ebenfalls eine Umsetzung von symmetrischer auf asymmetrische Übertragung der TV-Signale statt, damit die Signale einem asymmetrisch betriebenen Fernsehgerät 13 zugeführt werden können. Die differierende Übertragungscharakteristik einer symmetrischen Übertragung bei 100 Ω Impedanz und einer asymmetrischen Übertragung bei 75 Ω Impedanz werden im Nachbrennverstärker 9, unabhängig von der leitungsabhängigen Dämpfung, ebenfalls durch eine entsprechende Verstärkung der TV-Signale kompensiert. Zusätzlich findet im Nachbrennverstärker 9 Kabelentzerrung statt. Folglich besitzt der Nachbrennverstärker 9 mindestens einen Eingang 10 mit einem 100 Ω Eingangswiderstand zum Empfangen der symmetrisch übertragenen TV-Signale sowie einen 75 Ω Ausgang 11 zur Ausgabe der verstärkten und auf eine asymmetrische Übertragung zurückgesetzten TV-Signale. An diesen Ausgang 11 schließt dann eine 75 Ω Koaxialleitung 12 an, welche die TV-Signale schließlich an das Fernsehendgerät 13 überträgt.

Mit diesem System zur universellen Verkabelung können die ankommenden TV-Signale, aber auch andere Signale für die Weiterleitung an z.B. Hörfunkgeräte, Computer, etc., aktiv verteilt und die beim Nutzer ankommenden Signale durch geeignete Einstellung des Nachbrennverstärkers 9 für den Empfang beim Endgerät optimiert werden. Ferner kann die Stromversorgung des Nachbrennverstärkers 9 mittels Fernspeisung auch aus dem aktiven Anpaßglied 3 erfolgen, z.B. über Phantomspeisung über das Datenkabelpaar 7. Durch den Einbau einer geeigneten EDV-Schnittstelle ist es ferner möglich, das aktive Anpaßglied 3 mittels einer geeigneten Management-Software zu steuern. Hierbei kann z.B. die Zugangsberechtigung an die universelle Verkabelung für Benutzer durch Schalten der Ausgänge 4 des aktiven Anpaßgliedes 3 gesteuert werden. Über das Datenkabelpaar 7 können aber auch Befehle zur Einstellung des Nachbrennverstärkers 9 z.B. in Abhängigkeit der jeweiligen Kabellänge vom aktiven Anpaßglied 3 aus gesteuert werden.

Schließlich ist es mit dem vorliegenden System möglich, TV-Signale in Breitbandvideoart (40 bis 450 MHz) zu übertragen, so daß mittels handelsüblicher Frequenzumsetzer jede gewünschte Übertragung realisiert werden kann.

## Patentansprüche

1. System zur universellen Verkabelung eines Gebäudes oder mehrerer Nutzer für die Übertragung von Signalen, mit:
- einem ausschließlich symmetrisch betriebenen Leitungsnetz (7) zur Übertragung von Signalen an verschiedene Nutzer,
- einem aktiven Anpaßglied (3) für asymmetrisch übertragene Breitbandsignale mit einer Vielzahl von Kanälen, insbesondere TV-Breitbandsignale, an der Eingangsseite des Leitungsnetzes (7), welches einen aktiven Umsetzer zum Umsetzen der ankommenden Signale von asymmetrischer auf symmetrische Übertragung und einen Verteiler zum Verteilen der symmetrischen Signale auf mehrere Ausgänge umfaßt, und
- einem Verstärker (9) auf der Nutzerseite des Leitungsnetzes, welcher derart ausgebildet ist, daß er längenabhänge Leitungsverluste und durch die Umsetzung auf die symmetrische Übertragung bedingte frequenzabhängige Leitungsverluste im Leitungsnetz (7) der universellen Verkabelung kompensiert.

2. System nach Anspruch 1, **dadurch gekennzeichnet, daß** der aktive Umsetzer einen Verstärker aufweist, der Anpaßverluste ausgleicht.

3. System nach Anspruch 1 oder 2, **dadurch gekennzeichnet, daß** das aktive Anpaßglied (3) derart betreibbar ist, daß die Umsetzung von asymmetrischer auf symmetrische Übertragung mit einer Impedanzänderung von 75 Ω auf 100 Ω einhergeht.

4. System nach einem der vorstehenden Ansprüche, **dadurch gekennzeichnet, daß** sich dem aktiven Anpaßglied (3) ein weiterer Verteiler (6) anschließt.

5. System nach einem der vorstehenden Ansprüche, **dadurch gekennzeichnet, daß** das aktive Anpaßglied (3) derart betreibbar ist, daß es zur Fernspeisung von nachgeschalteten Vorrichtungen dient.

6. System nach einem der vorstehenden Ansprüche, **dadurch gekennzeichnet, daß** das aktive Anpaßglied (3) eine EDV-Schnittstelle umfaßt.

7. System nach Anspruch 6, **dadurch gekennzeichnet, daß** durch die EDV-Schnittstelle mittels einer geeigneten Managementsoftware das aktive Anpaßglied (3) steuerbar ist.

8. System nach einem der vorstehenden Ansprüche, **dadurch gekennzeichnet, daß** das Anpaßglied (3) einen Anschluß (2) an ein lokales Netzwerk aufweist.

9. System nach einem der vorstehenden Ansprüche, **dadurch gekennzeichnet, daß** der Verstärker (9) derart betreibbar ist, daß er differierende Übertragungscharakteristiken der verschiedenen Übertragungsarten, im besonderen der symmetrischen und asymmetrischen Übertragung, mittels Kabelentzerrung, unabhängig von der Dämpfung, kompensiert.

10. System nach einem der vorstehenden Ansprüche, **dadurch gekennzeichnet, daß** der Verstärker (9) einen Umsetzer von symmetrischer auf asymmetrische Übertragung aufweist.

11. System nach Anspruch 10, **dadurch gekennzeichnet, daß** der Verstärker (9) derart betreibbar ist, daß die Umsetzung mit einer Impedanzänderung von 100 Ω auf 75 Ω einhergeht.

12. System nach einem der vorstehenden Ansprüche, **dadurch gekennzeichnet, daß** am Verstärker (9) ein Anschluß (11) für ein Koaxialkabel vorgesehen ist.

13. System nach einem der vorstehenden Ansprüche, **dadurch gekennzeichnet, daß** die Stromversorgung des Verstärkers mittels Fernspeisung über die universelle Verkabelung erfolgt.

14. System nach einem der vorstehenden Ansprüche, **dadurch gekennzeichnet, daß** die Übertragung zwischen dem aktiven Anpaßglied (3) und dem Verstärker (9) symmetrisch ist.

15. System nach einem der vorstehenden Ansprüche, **dadurch gekennzeichnet, daß** Einstellungen an dem Verstärker (9) über das aktive Anpaßglied (3) steuerbar sind.

16. System nach Anspruch 15, **dadurch gekennzeichnet, daß** der Verstärker (9) durch die EDV-Schnittstelle des Anpaßgliedes (3) und mittels einer Managementsoftware steuerbar ist.

17. System nach einem der vorstehenden Ansprüche, **dadurch gekennzeichnet, daß** das aktive Anpaßglied (3) und ein weiterer Verteiler (6) über wenigstens ein Patchkabel (5) in Reihe geschaltet sind.

18. System nach einem der vorstehenden Ansprüche, **dadurch gekennzeichnet, daß** auf der Nutzerseite dem Verstärker (9) wenigstens eine Datendose (8) vorgeschaltet ist.

19. System nach einem der vorstehenden Ansprüche, **dadurch gekennzeichnet, daß** das aktive Anpaßglied (3) derart betreibbar ist, daß es ein asymmetrisch übertragenes Breitbandsignal, insbesondere TV-Breitbandsignal, umsetzt.

20. System nach Anspruch 19, **dadurch gekennzeichnet, daß** das Breitbandsignal eine Übertragungsbandbreite im Basisband von 40 - 450 MHz aufweist.

21. System nach einem der vorstehenden Ansprüche, **dadurch gekennzeichnet, daß** die Stromversorgung des Verstärkers (9) mittels Fernspeisung aus dem aktiven Anpaßglied (3) erfolgt.

22. System nach Anspruch 21, **gekennzeichnet durch** wenigstens ein freies Aderpaar des Leitungsnetzes (7), über welches die Fernspeisung erfolgt.

23. System nach Anspruch 22, **dadurch gekennzeichnet, daß** die Fernspeisung durch Phantomspeisung über ein Datenübertragungspaar erfolgt.

24. Verfahren zur Übertragung von Signalen mittels einer universellen Verkabelung eines Gebäudes oder mehrerer Nutzer, mit den Schritten:
- aktives Umsetzen von ankommenden asymmetrisch übertragenen Breitbandsignalen mit einer Vielzahl von Kanälen, insbesondere TV-Breitbandsignalen, von asymmetrischer auf symmetrische Übertragung und Verteilen der Signale auf mehrere Ausgänge an der Eingangsseite eines Leitungsnetzes (7),
- Symmetrisches Übertragen der Signale über das Leitungsnetz (7) bis zum jeweiligen Nutzer,
- Verstärken der Signale auf der Nutzerseite, derart, daß längenabhänge Leitungsverluste und durch die Umsetzung auf die symmetrische Übertragung bedingte frequenzabhängige Leitungsverluste im Leitungsnetz (7) der universellen Verkabelung kompensiert werden, und
- Umsetzen der Signale von symmetrischer auf asymmetrische Übertragung für die Zufuhr an den jeweiligen Nutzer.

25. Verwendung eines Anpaßgliedes (3) in einem System nach einem der Ansprüche 1-23, welches einen aktiven Umsetzer zum Umsetzen der asymmetrisch übertragenen Breitbandsignale mit einer Vielzahl von Kanälen, insbesondere TV-Breitbandsignale, von asymmetrischer auf symmetrische Übertragung und einen Verteiler zum Verteilen der Signale auf mehrere Ausgänge umfaßt.

26. Verwendung eines Verstärkers (9) auf der Nutzerseite eines Leitungsnetzes in einem System nach einem der Ansprüche 1-23, welcher derart ausgebildet ist, daß er längenabhänge Leitungsverluste und durch die Umsetzung auf die symmetrische Übertragung bedingte frequenzabhängige Leitungsverluste im Leitungsnetz (7) der universellen Verkabelung kompensiert.

## Claims

1. System for the universal wiring of a building or of a number of users for the transmission of signals, comprising:
- an exclusively symmetrically operated supply network (7) for transmitting signals to various users,
- an active adapter (3) for asymmetrically transmitted broadband signals having a large number of channels, in particular TV broadband signals, on the input side of the supply network (7), which comprises an active converter for converting the incoming signals from asymmetrical to symmetrical transmission and a distributor for distributing the symmetrical signals to a number of outputs, and
- an amplifier (9) on the user side of the supply network, which is designed such that it compensates for length-dependent supply losses and frequency-dependent supply losses, caused by the conversion to symmetrical transmission, in the supply network (7) of the universal wiring.

2. System according to Claim 1, **characterized in that** the active converter has an amplifier which compensates for adaptation losses.

3. System according to Claim 1 or 2, **characterized in that** the active adapter (3) can be operated such that the conversion from asymmetrical to symmetrical transmission is associated with an impedance change from 75 Ω to 100 Ω.

4. System according to any of the preceding claims, **characterized in that** a further distributor (6) is connected to the active adapter (3).

5. System according to any of the preceding claims, **characterized in that** the active adapter (3) can be operated such that it is used to remotely supply devices that are connected downstream.

6. System according to any of the preceding claims, **characterized in that** the active adapter (3) comprises an EDP interface.

7. System according to Claim 6, **characterized in that** the active adapter (3) can be controlled via the EDP interface by means of a suitable item of management software.

8. System according to any of the preceding claims, **characterized in that** the adapter (3) has a connection (2) to a local network.

9. System according to any of the preceding claims, **characterized in that** the amplifier (9) can be operated such that it compensates for differing transmission characteristics of the various transmission modes, in particular symmetrical and asymmetrical transmission, by correcting the distortion of cables, independently of the attenuation.

10. System according to any of the preceding claims, **characterized in that** the amplifier (9) has a converter for converting from symmetrical to asymmetrical transmission.

11. System according to Claim 10, **characterized in that** the amplifier (9) can be operated such that the conversion is associated with an impedance change from 100 Ω to 75 Ω.

12. System according to any of the preceding claims, **characterized in that** a connection (11) for a coaxial cable is provided on the amplifier (9).

13. System according to any of the preceding claims, **characterized in that** power is supplied to the amplifier by means of remote supply via the universal wiring.

14. System according to any of the preceding claims, **characterized in that** the transmission between the active adapter (3) and the amplifier (9) is symmetrical.

15. System according to any of the preceding claims, **characterized in that** settings on the amplifier (9) can be controlled via the active adapter (3).

16. System according to Claim 15, **characterized in that** the amplifier (9) can be controlled via the EDP interface of the adapter (3) and by means of an item of management software.

17. System according to any of the preceding claims, **characterized in that** the active adapter (3) and a further distributor (6) are connected in series via at least one patch cable (5).

18. System according to any of the preceding claims, **characterized in that** at least one data outlet (8) is connected upstream of the amplifier (9) on the user side.

19. System according to any of the preceding claims, **characterized in that** the active adapter (3) can be operated such that it converts an asymmetrically transmitted signal, in particular a TV broadband signal.

20. System according to Claim 19, **characterized in that** the broadband signal has a transmission bandwidth in the baseband of 40 - 450 MHz.

21. System according to any of the preceding claims, **characterized in that** power is supplied to the amplifier (9) by means of remote supply from the active adapter (3).

22. System according to Claim 21, **characterized by** at least one free pair of leads of the supply network (7) via which the remote supply takes place.

23. System according to Claim 22, **characterized in that** the remote supply takes place by phantom supply via a data transmission pair.

24. Method of transmitting signals by means of universal wiring of a building or of a number of users, comprising the steps:
- active conversion of incoming asymmetrically transmitted broadband signals using a large number of channels, in particular TV broadband signals, from asymmetrical to symmetrical transmission and distribution of the signals to a number of outputs at the input side of a supply network (7),
- symmetrical transmission of the signals over the supply network (7) to the respective user,
- amplification of the signals on the user side such that length-dependent supply losses and frequency-dependent supply losses, caused by the conversion to symmetrical transmission, in the supply network (7) of the universal wiring are compensated, and
- conversion of the signals from symmetrical to asymmetrical transmission for the supply to the respective user.

25. Use of an adapter (3) in a system according to any of Claims 1 to 23, which comprises an active converter for converting the asymmetrically transmitted broadband signals using a large number of channels, in particular TV broadband signals, from asymmetrical to symmetrical transmission and a distributor for distributing the signals to a number of outputs.

26. Use of an amplifier (9) on the user side of a supply network in a system according to any of Claims 1 to 23, which is designed such that it compensates for length-dependent supply losses and frequency-dependent supply losses, caused by the conversion to symmetrical transmission, in the supply network (7) of the universal wiring.

## Revendications

1. Système pour le câblage universel d'un bâtiment ou de plusieurs utilisateurs, pour la transmission de signaux, comprenant :
- un réseau de lignes (7) que l'on fait fonctionner exclusivement selon un mode symétrique, pour la transmission de signaux à différents utilisateurs,
- un organe d'adaptation actif (3) pour des signaux large bande avec un grand nombre de canaux, transmis selon un mode asymétrique, notamment des signaux TV large bande, sur le côté entrée du réseau de lignes (7), qui comprend un convertisseur actif destiné à convertir les signaux arrivants, d'un mode de transmission asymétrique à un mode de transmission symétrique, et un répartiteur pour répartir les signaux symétriques sur plusieurs sorties, et
- un amplificateur (9) sur le côté utilisateur du réseau de lignes, qui est d'une configuration telle, qu'il compense des pertes en ligne fonction de la longueur, et des pertes en ligne fonction de la fréquence dues à la conversion au mode de transmission symétrique, dans le réseau de lignes (7) du câblage universel.

2. Système selon la revendication 1, **caractérisé en ce que** le convertisseur actif comprend un amplificateur qui compense des pertes d'adaptation.

3. Système selon la revendication 1 ou 2, **caractérisé en ce qu'**il est possible de faire fonctionner l'organe d'adaptation actif (3) de façon à ce que la conversion d'une transmission en mode asymétrique à une transmission en mode symétrique se fasse avec une variation d'impédance de 75 Ω à 100 Ω.

4. Système selon l'une des revendications précédentes, **caractérisé en ce qu'**à l'organe d'adaptation actif (3) se raccorde un autre répartiteur (6).

5. Système selon l'une des revendications précédentes, **caractérisé en ce que** l'on peut faire fonctionner l'organe d'adaptation actif (3) de façon telle qu'il serve à l'alimentation à distance de dispositifs montés en aval.

6. Système selon l'une des revendications précédentes, **caractérisé en ce que** l'organe d'adaptation actif (3) comprend une interface informatique.

7. Système selon la revendication 6, **caractérisé en ce que** l'organe d'adaptation actif (3) peut être commandé par l'intermédiaire de l'interface informatique, au moyen d'un logiciel de management.

8. Système selon l'une des revendications précédentes, **caractérisé en ce que** l'organe d'adaptation (3) présente un raccord de branchement (2) à un réseau local.

9. Système selon l'une des revendications précédentes, **caractérisé en ce qu'**il est possible de faire fonctionner l'amplificateur (9) de façon à ce qu'il compense des caractéristiques différentes de transmission des différents modes de transmission, plus particulièrement du mode de transmission symétrique et asymétrique, par correction de câble, indépendamment de l'atténuation.

10. Système selon l'une des revendications précédentes, **caractérisé en ce que** l'amplificateur (9) comprend un convertisseur du mode de transmission symétrique au mode de transmission asymétrique.

11. Système selon la revendication 10, **caractérisé en ce qu'**il est possible de faire fonctionner l'amplificateur (9) de façon à ce que la conversion se fasse avec une variation d'impédance de 100 Ω à 75 Ω.

12. Système selon l'une des revendications précédentes, **caractérisé en ce que** sur l'amplificateur (9) est prévu un raccord de branchement (11) pour un câble coaxial.

13. Système selon l'une des revendications précédentes, **caractérisé en ce que** l'alimentation en courant de l'amplificateur s'effectue par une alimentation à distance par l'intermédiaire du câblage universel.

14. Système selon l'une des revendications précédentes, **caractérisé en ce que** la transmission entre l'organe d'adaptation actif (3) et l'amplificateur (9) est symétrique.

15. Système selon l'une des revendications précédentes, **caractérisé en ce que** les réglages sur l'amplificateur (9) peuvent être commandés par l'intermédiaire de l'organe d'adaptation actif (3).

16. Système selon la revendication 15, **caractérisé en ce que** l'amplificateur (9) peut être commandé par l'intermédiaire de l'interface informatique de l'organe d'adaptation (3) et au moyen d'un logiciel de management.

17. Système selon l'une des revendications précédentes, **caractérisé en ce que** l'organe d'adaptation actif (3) et un autre répartiteur (6) sont montés en série par l'intermédiaire d'au moins un câble composé ou câble-patch (5).

18. Système selon l'une des revendications précédentes, **caractérisé en ce que** sur le côté utilisateur, au moins une boîte de données (8) est montée en amont de l'amplificateur (9).

19. Système selon l'une des revendications précédentes, **caractérisé en ce qu'**il est possible de faire fonctionner l'organe d'adaptation actif (3) de façon à ce qu'il convertisse un signal large bande transmis en mode asymétrique, notamment un signal TV large bande.

20. Système selon la revendication 19, **caractérisé en ce que** le signal large bande présente une largeur de bande de transmission dans la bande de base de 40 - 450 MHz.

21. Système selon l'une des revendications précédentes, **caractérisé en ce que** l'alimentation en courant de l'amplificateur (9) s'effectue au moyen d'une alimentation à distance à partir de l'organe d'adaptation actif (3).

22. Système selon la revendication 21, **caractérisé par** au moins une paire de brins libre du réseau de lignes (7), par l'intermédiaire de laquelle s'effectue l'alimentation à distance.

23. Système selon la revendication 22, **caractérisé en ce que** l'alimentation à distance s'effectue par alimentation fantôme, par l'intermédiaire d'une paire de transmission de données.

24. Procédé de transmission de signaux au moyen d'un câblage universel d'un bâtiment ou de plusieurs utilisateurs, le procédé présentant les étapes suivantes :
- conversion active de signaux large bande arrivants, avec un grand nombre de canaux, notamment des signaux TV large bande, qui ont été transmis en mode asymétrique, d'un mode de transmission asymétrique en mode de transmission symétrique, et répartition des signaux sur plusieurs sorties sur le côté entrée d'un réseau de lignes (7),
- transmission en mode symétrique des signaux par l'intermédiaire du réseau de lignes (7) jusqu'à l'utilisateur respectivement considéré,
- amplification des signaux sur le côté utilisateur de façon à compenser des pertes en ligne fonction de la longueur, et des pertes en ligne fonction de la fréquence dues à la conversion au mode de transmission symétrique, dans le réseau de lignes (7) du câblage universel, et
- conversion des signaux d'une transmission en mode symétrique à une transmission en mode asymétrique pour l'amenée à l'utilisateur respectivement considéré.

25. Utilisation d'un organe d'adaptation (3) dans un système selon l'une des revendications 1-23, l'organe d'adaptation comprenant un convertisseur actif pour la conversion des signaux large bande avec un grand nombre de canaux, notamment des signaux TV large bande, d'un mode de transmission asymétrique à un mode de transmission symétrique, et un répartiteur pour répartir les signaux sur plusieurs sorties.

26. Utilisation d'un amplificateur (9) sur le côté utilisateur d'un réseau de lignes dans un système selon l'une des revendications 1-23, l'amplificateur étant conçu de façon à compenser des pertes en ligne fonction de la longueur, et des pertes en ligne fonction de la fréquence dues à la conversion au mode de transmission symétrique dans le réseau de lignes (7) du câblage universel.
